# EUROPÄISCHE PATENTANMELDUNG

(11) **EP 1 505 332 A1**
(43) Veröffentlichungstag der Anmeldung: **09.02.2005**
(21) Anmeldenummer: 04090265.2
(22) Anmeldetag: 29.06.2004
(51) Int. Cl.: F16L 58/10

(54) **Rohrleitungssystem für Trinkwasser**

(30) Priorität: 07.08.2003 DE 10336728
(71) Anmelder: Geberit Mapress GmbH, 40746 Langenfeld (DE)
(72) Erfinder: Speckemeyer, Jens, 45475 Mülheim (DE)
(74) Vertreter: Meissner, Peter E., Dipl.-Ing.

(57) **Zusammenfassung**

Die Erfindung betrifft ein Rohrleitungssystem für Trinkwasser, bestehend aus Komponenten wie Leitungsrohrabschnitten, Verbindungselementen, Absperrelementen und Messgeräten. Dabei ist die Oberfläche mindestens einer irgendeine Unstetigkeit in Bezug auf einen geraden und glatten Verlauf aufweisenden und mit dem Trinkwasser in Berührung kommenden Stelle des Verbindungsbereiches der Komponenten mit einem biozid wirkenden Mittel in Kontakt.

## Beschreibung

Die Erfindung betrifft ein Rohrleitungssystem für Trinkwasser, gemäß dem Oberbegriff des Patentanspruches 1.

Gattungsgemäße Rohrleitungssysteme bestehen aus verschiedenen Komponenten wie z. B. Leitungsabschnitten, Verbindungselementen, Absperrelementen und Messgeräten.

Diese Rohrleitungssysteme können beispielsweise erdverlegte Rohrleitungssysteme vom Wasserversorger oder sich davon abzweigende Rohrleitungssysteme einer Hauswasserinstallation sein.

Oftmals sind die Verbindungen der Leitungsrohrabschnitte mit den Verbindungselementen als Stumpf- oder Überlappverbindungen ausgeführt. Bei Überlappverbindungen werden die Endbereiche der Leitungsrohrabschnitte in das Verbindungselement hineingesteckt oder auf das Verbindungselement aufgesteckt, so dass sich ein Überdeckungsabschnitt ergibt. Üblicherweise ist der Überdeckungsabschnitt mit einem Dichtelement versehen, so dass die Rohrverbindung wasserdicht ist.

Bei den Überlappverbindungen großformatiger erdverlegter Rohrleitungssysteme ist eine axiale Ausziehsicherung der Rohrverbindung nicht notwendig, da die durch den Innendruck entstehenden Längskräfte in der Leitung über die Reibungskräfte der Rohrleitung im Erdreich aufgenommen werden.

Bei Rohrleitungssystemen z. B. für die Hauswasserinstallation, sind die Rohrleitungen kleinformatiger. Hier kann das Verbindungselement auch als Fitting, insbesondere Pressfitting ausgebildet sein, in den die Endbereiche der Leitungsrohrabschnitte hineingesteckt oder aufgesteckt werden können.

Das Pressfitting-System für die Trinkwasserinstallation aus hochlegiertem Stahl und Kupfer ist bekannt (s. Prospekt Mapress GmbH, Lieferprogramm 4/2001).

Das bekannte System besteht im Wesentlichen aus einem plastisch verformbaren metallischen Fittingelement, das je nach Anwendungsbereich als Bogen- oder T-Stück, Muffe oder Übergangsstück ausgebildet oder mit einer Anschlussverschraubung versehen ist.

Der Pressfitting weist im Einschubbereich einen im Längsschnitt wulstartigen ein Dichtelement aufnehmenden Abschnitt auf. An den Ringwulst schließt sich ein sich in Längsrichtung erstreckender und einen Überdeckungsabschnitt bildender, zylindrisch ausgebildeter Abschnitt an, in den der Endbereich des Leitungsrohrabschnittes eingeschoben wird.

Am Ende der Erstreckung dieses zylindrischen Bereiches ist ein radial nach innen sich erstreckender sickenförmiger Absatz angebracht, der als Anschlag für den einschiebbaren glattendigen Leitungsrohrabschnitt dient.

Mittels eines mindestens zwei Pressbacken aufweisenden Presswerkzeuges wird der Ringwulst plastisch und das Dichtelement elastisch verformt. Zusätzlich wird mit dem selben Pressvorgang im zylindrischen Bereich des Pressfittings eine sickenförmige Vertiefung angepresst, die auch den darunter liegenden eingeschobenen Leitungsrohrabschnitt mit erfasst. Das elastisch verformte Dichtelement übernimmt bei diesem Verbindungssystem die Dichtfunktion, während die angepresste sickenförmige Vertiefung, die durch den Innendruck entstehenden Längskräfte aufnimmt.

Von Nachteil bei dem bekannten Rohrleitungssystem für Trinkwasser ist, dass es nicht auszuschließen ist, dass im Rohrleitungssystem, insbesondere im Verbindungsbereich, an Stellen die irgendeine Unstetigkeit in Bezug auf einen geraden und glatten Verlauf aufweisen und mit dem Trinkwasser in Berührung kommen, sich im Laufe der Zeit unerwünschte Mikroorganismen, z. B. Keime oder Pilzsporen festsetzen können, die bei einer desinfizierenden Durchspülung nicht erfasst werden und somit ins Trinkwasser gelangen können.

Diese Stellen können z. B. Spalte, Zwickel oder Ähnliches sein, in denen eine einwandfreie desinfizierende Spülung nicht gewährleistet werden kann.

Bei sich überlappenden Verbindungen, die mit einem Dichtelement versehen sind, ist nicht auszuschließen, dass sich im Bereich des Dichtelementes, bzw. der Überlappung, Bakterien und Keime festsetzen können, die nur schwer von einer desinfizierenden Spülung erfasst werden können.

Aufgabe der Erfindung ist es, ein Rohrleitungssystem für Trinkwasser anzugeben, welches die geschilderten Nachteile vermeidet.

Diese Aufgabe wird ausgehend vom Oberbegriff in Verbindung mit dem kennzeichnenden Teil des Anspruches 1 gelöst. Vorteilhafte Weiterbildungen sind jeweils Gegenstand von Unteransprüchen.

Nach der Lehre der Erfindung ist die Oberfläche mindestens einer, eine Unstetigkeit in Bezug auf einen geraden und glatten Verlauf aufweisenden, und mit dem Trinkwasser in Berührung kommenden Stelle des Verbindungsbereiches der Komponenten mit einem biozid wirkenden Mittel in Kontakt.

Dieses Mittel kann z. B. ein aktives, antimikrobielles, wasserunlösliches Polymer sein, welches unter dem Namen SAM-Polymer® bekannt ist (s. Degussa, Advanced Materials, 19.05.2003).

Erfindungsgemäß ist in einer ersten Ausführungsform die Oberfläche zumindest einer mit dem Trinkwasser in Berührung kommenden Stellen des Rohrleitungssystems mit einer biozid wirkenden, Polymer aufweisenden Beschichtung versehen.

Dies kann bei Pressfitting-Verbindungen beispielsweise das Dichtelement und oder der Überlappbereich sein. Bei stumpf zusammengeschweißten Rohren kann dies z. B. der Schweißnahtbereich sein.

Diese Beschichtung kommt beispielsweise bei Rohrleitungssystemen aus Metall in Betracht, kann aber auch für andere Rohrleitungswerkstoffe verwendet werden.

Vorteil dieser Beschichtung ist, dass die darin enthaltenen biozid wirkenden Polymere wasserunlöslich sind und daher dauerhaft an ihrem Applikationsort verbleiben und somit nicht unkontrolliert an das Trinkwasser abgegeben werden.

Diese Polymere wirken bei Kontakt, d. h. sie hemmen das Wachstum verschiedener Mikroorganismen, wie Bakterien, Pilze oder Algen, sobald sie mit ihnen in Berührung kommen. Somit werden auf einfache und wirksame Weise etwaige im Rohrleitungssystem enthaltene Mikroorganismen abgetötet, so dass ein aktiver Trinkwasserschutz erreicht wird, wobei etwaige ansonsten vorgeschriebene, regelmäßig durchzuführende desinfizierende Spülungen, wie z. B. im Krankenhausbereich, entfallen können.

Dies spart einerseits Kosten, andererseits wird hierdurch ein permanent wirkender Trinkwasserschutz, im Vergleich zu in Zeitabständen durchgeführten desinfizierenden Spülungen, erreicht.

In einer vorteilhaften Weiterbildung des Systems steht die gesamte mit dem Trinkwasser in Berührung kommende Oberfläche des Rohrleitungssystems in Kontakt mit einem biozid wirkenden Mittel, wobei in einer ersten Ausführungsform die Oberfläche mit einer biozid wirkenden Polymer aufweisenden Beschichtung versehen ist.

Bei einer zweiten vorteilhaften Ausführungsform, z. B. bei Rohrleitungssystemen die aus Kunststoff bestehen, ist der Kunststoff selbst mindestens in dem mit dem Trinkwasser in Berührung kommenden oberflächennahen Bereich mit den biozid wirkenden Polymeren durchsetzt.

Vorteil bei dieser Ausführungsform ist, dass das Rohrleitungssystem keine aufwändig aufzubringende Beschichtung erhalten muss, sondern der Rohrleitungswerkstoff selber weist die biozid wirkende Eigenschaft auf.

Auch die Qualitätssicherung eines derart hergestellten Rohres wird im Vergleich zu einem beschichteten Rohr deutlich vereinfacht und damit kostengünstiger.

Bei Rohrleitungssystemen, bei denen beispielsweise die Leitungsrohrabschnitte und die Verbindungselemente im Verbindungsbereich einen Überdeckungsabschnitt aufweisen und im Überdeckungsabschnitt ein elastisches Dichtelement angeordnet ist, welches mit dem Trinkwasser in Berührung kommt, steht das Dichtelement ebenfalls in Kontakt mit dem biozid wirkenden Mittel.

In einer ersten Ausführungsform ist das Dichtelement selbst mindestens in dem mit Trinkwasser in Berührung kommenden oberflächennahen Bereich mit dem biozid wirkenden Polymer durchsetzt, es kann aber auch, entsprechend weiterer Ausführungsformen vollständig mit dem Polymer durchsetzt oder mit einer biozid wirkenden, Polymer aufweisenden Beschichtung versehen sein.

Nach einer vorteilhaften Weiterbildung stehen ebenfalls die Überdeckungsabschnitte von Leitungsrohrabschnitten und Verbindungselementen mindestens in dem mit Trinkwasser in Berührung kommenden Bereich mit dem biozid wirkenden Mittel in Kontakt.

Hierdurch werden die Abschnitte der Verbindungsbereiche, die für eine etwaige Keimanlagerung als kritisch anzusehen sind, ebenfalls wirksam geschützt.

Der Schutz kann z. B. über das Aufbringen einer biozid wirkenden Beschichtung im Überdeckungsabschnitt erfolgen. Hierbei wird mindestens eine der einander zugewandten Oberflächen des Leitungsrohrabschnittes bzw. des Verbindungselementes und mindestens der mit Trinkwasser in Berührung kommenden Bereich mit der Beschichtung versehen.

Bei einem Rohrleitungssystem aus Kunststoff wird der Überdeckungsabschnitt vorteilhaft über den mindestens im oberflächennahen Bereich mit den biozid wirkenden Polymeren durchsetzten Kunststoff selbst geschützt.

Auch bei Rohrleitungssystemen, bei denen die Leitungsrohrabschnitte als Verbundrohre ausgebildet sind, kann ein aktiver Trinkwasserschutz erreicht werden. Diese Verbundrohre bestehen z. B. aus einem metallischen Innenliner und einer Kunststoffummantelung, wobei ebenfalls die Oberfläche der mit dem Trinkwasser in Berührung kommenden und für eine Keimansammlung kritische Stelle mit einem biozid wirkenden Mittel in Kontakt ist.

Bei diesen Verbundrohren ist die Innenoberfläche des metallischen Innenliners an mindestens einer der für eine Keimansammlung kritischen Stelle mit einer biozid wirkenden Innenbeschichtung versehen und der Ummantelungswerkstoff mindestens im oberflächennahen Bereich mit biozid wirkenden Polymeren durchsetzt oder mit einer entsprechenden Außenbeschichtung an mindestens einer der für eine Keimansammlung kritischen Stelle versehen. Dadurch ist auch bei einer Überlappverbindung der Verbindungsbereich zwischen Verbundrohr und Verbindungselement wirksam biozid ausgebildet.

Ein entsprechender Schutz kann auch bei Verbundrohren erreicht werden, die aus einem Kunststoffaußen- und Innenmantel mit einem dazwischen angeordneten metallischen Rohr bestehen.

In diesem Fall ist der außen- und der innenliegende Kunststoffmantel mit biozid wirkenden Polymeren zumindest im oberflächennahen Bereich durchsetzt oder ebenfalls mit einer biozid wirkenden Beschichtung, mindestens in dem mit Trinkwasser in Berührung kommenden Bereich versehen, so dass bei einer sich überlappenden Rohrverbindung der für eine Keimansammlung kritische Überdeckungsbereich ebenfalls geschützt ist.

Fall erforderlich kann, z. B. bei sehr hohen Anforderungen an die Keimfreiheit des Gesamtsystems, zusätzlich auch die nicht unmittelbar mit dem Trinkwasser in Berührung kommende Oberfläche des Rohrleitungssystems geschützt werden. Dies geschieht auf dem selben Wege, wie bereits weiter oben für die mit Trinkwasser in Berührung kommenden Oberflächen beschrieben.

Weitere Merkmale, Vorteile und Einzelheiten der Erfindung ergeben sich aus der nachfolgenden Beschreibung von einem in einer Zeichnung dargestellten Ausführungsbeispiel.

Es zeigt:
- **Figur 1**: einen halbseitigen Längsschnitt durch eine Rohrverbindung mit Pressfitting des erfindungsgemäßen Rohrleitungssystems nach dem Einschieben des Leitungsrohres aber vor der Verpressung
- **Figur 2**: wie Figur 1 aber andere Ausführungsform.

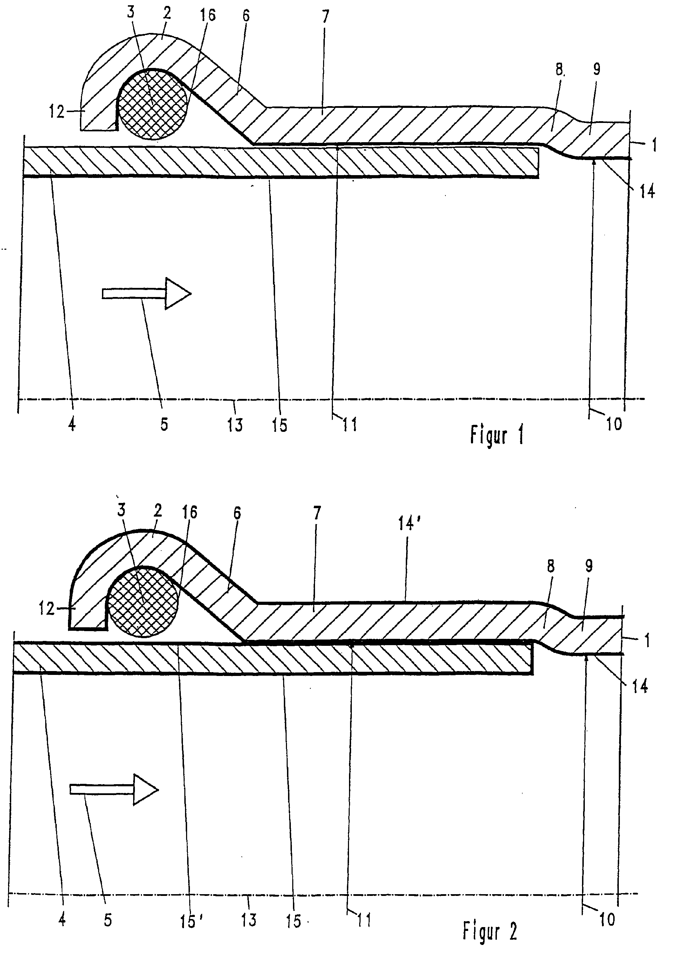

In **Figur 1** ist ein hälftiger Längsschnitt einer ersten Ausführungsform des erfindungsgemäßen Rohrleitungssystems dargestellt.

Die hier dargestellt Rohrverbindung besteht beispielsweise aus einem metallischen Pressfitting 1, dessen stimseitiges Ende eine Ringwulst 2 mit einem darin einlegbaren elastischen Dichtelement 3 aufweist. Üblicherweise ist das Dichtelement 3 als Rundschnurring ausgebildet. Erfindungsgemäß ist das Dichtelement 3 mit einem biozid wirkenden Polymer durchsetzt (hier nicht dargestellt) oder es ist mit einer biozid wirkenden Beschichtung 16 versehen.

In den Pressfitting 1 ist ein glattendiger Leitungsrohrabschnitt 4 eingeschoben, dessen Einschubrichtung 5 durch einen Pfeil gekennzeichnet ist. In Einschubrichtung 5 gesehen schließt sich an die Ringwulst 2 mit einem schrägen Übergang 6 ein zylindrisch ausgebildeter, ein eine Überdeckung bildender Abschnitt 7 an. Dieser geht mit einem Absatz 8 in einen zweiten zylindrisch ausgebildeten Abschnitt 9 über, dessen Innendurchmesser 10 geringer ist, als der Innendurchmesser 11 des ersten zylindrischen Abschnittes 9. Am Absatz 8 kommt auf der Innenseite der eingeschobene Leitungsabschnitt 4 zur Anlage.

Entgegengesetzt zur Einschubrichtung 5 geht in diesem Ausführungsbeispiel die Ringwulst 2 über in einen stimseitigen Bereich 12, dessen Schenkel nahezu senkrecht liegt zur Achse 13 des Leitungsabschnittes 4.

Erfindungsgemäß weist die Innenseite des Pressfittings 1 wie auch die Innenseite des Leitungsrohrabschnittes 4 eine biozid wirkende Beschichtung 14, 15 auf, so dass neben der wasserführenden Innenoberfläche des Rohrleitungssystems auch der Überdeckungsabschnitt und der Dichtungsbereich der Rohrverbindung wirksam geschützt sind.

In **Figur 2** ist vergleichbar wie in Figur 1 im gleichen hälftigen Längsschnitt eine zweite Ausführungsform dargestellt, wobei für gleiche Teile gleiche Bezugszeichen gewählt worden sind.

Im Unterschied zu Figur 1 sind in diesem Ausführungsbeispiel sowohl die Innen- als auch die Außenseite des Pressfittings 1 und des Leitungsabschnittes 4 mit einer biozid wirkenden Beschichtung 14, 14', 15, 15' versehen. Am einfachsten ist eine solche Beschichtung beispielsweise durch Tauchen der Teile aufzubringen.

Alternativ kann bei Rohrleitungssystemen aus Kunststoff auch der Kunststoff selbst mit biozid wirkenden Polymeren mindestens im oberflächennahen Bereich durchsetzt sein, so dass ein innerer und äußerer Schutz des Rohrleitungssystem vor dem Befall von Mikroorganismen wirksam gewährleistet wird.

### Bezugszeichenliste

| **Nr.** | **Bezeichnung** |
|---|---|
| 1 | Verbindungselement (Pressfitting) |
| 2 | Ringwulst |
| 3 | Dichtelement |
| 4 | Leitungsrohrabschnitt |
| 5 | Einschubrichtung |
| 6 | schräger Übergang |
| 7 | erster zylindrisch ausgebildeter Abschnitt (Überdeckungsabschnitt) |
| 8 | Absatz |
| 9 | zweiter zylindrisch ausgebildeter Abschnitt |
| 10 | Innendurchmesser zweiter Abschnitt |
| 11 | Innendurchmesser erster Abschnitt |
| 12 | stirnseitiger Bereich der Ringwulst |
| 13 | Achse Leitungsrohr |
| 14, 14' | Beschichtung Verbindungselement |
| 15, 15' | Beschichtung Leitungsrohrabschnitt |
| 16 | Beschichtung Dichtelement |

## Patentansprüche

1. Rohrleitungssystem für Trinkwasser, bestehend aus Komponenten wie Leitungsrohrabschnitten, Verbindungselementen, Absperrelementen und Messgeräten
**dadurch gekennzeichnet;**
**dass** die Oberfläche mindestens einer irgendeine Unstetigkeit in Bezug auf einen geraden und glatten Verlauf aufweisenden und mit dem Trinkwasser in Berührung kommenden Stelle des Verbindungsbereiches der Komponenten mit einem biozid wirkenden Mittel in Kontakt ist.

2. Rohrleitungssystem nach Anspruch 1
**dadurch gekennzeichnet,**
**dass** das Mittel ein aktives, antimikrobielles, wasserunlösliches Polymer ist.

3. Rohrleitungssystem nach Anspruch 1 und 2
**dadurch gekennzeichnet,**
**dass** der Kontakt eine Beschichtung (14, 15) ist.

4. Rohrleitungssystem nach Anspruch 1 und 2
**dadurch gekennzeichnet,**
**dass** die gesamte mit dem Trinkwasser in Berührung kommende Oberfläche des Rohrleitungssystems mit einem biozid wirkenden Mittel in Kontakt steht.

5. Rohrleitungssystem nach Anspruch 4
**dadurch gekennzeichnet,**
**dass** der Kontakt eine Beschichtung (14, 15) ist.

6. Rohrleitungssystem nach Anspruch 4
**dadurch gekennzeichnet,**
**dass** der für das Rohrleitungssystem verwendete Werkstoff mindestens in dem mit dem Trinkwasser in Berührung kommenden oberflächennahen Bereich mit biozid wirkenden Polymeren durchsetzt ist.

7. Rohrleitungssystem nach einem der Ansprüche 1-6
**dadurch gekennzeichnet,**
**dass** die Leitungsrohrabschnitte (4) und die Verbindungselemente (1) im Verbindungsbereich einen Überdeckungsabschnitt (7) aufweisen, wobei im Überdeckungsabschnitt (7) ein elastisches Dichtelement (3) angeordnet ist, welches mindestens an der mit dem Trinkwasser in Berührung kommenden Oberfläche des Rohrleitungssystems mit dem biozid wirkenden Mittel in Kontakt steht.

8. Rohrleitungssystem nach Anspruch 7
**dadurch gekennzeichnet,**
**dass** das Dichtelement (3) mindestens in dem mit Trinkwasser in Berührung kommenden oberflächennahen Bereich mit dem biozid wirkenden Polymer durchsetzt ist.

9. Rohrleitungssystem nach Anspruch 7
**dadurch gekennzeichnet,**
**dass** der Kontakt eine Beschichtung (16) ist.

10. Rohrleitungssystem nach einem der Ansprüche 7-9
**dadurch gekennzeichnet,**
**dass** der Überdeckungsabschnitt (7) mindestens in dem mit Trinkwasser in Berührung kommenden Bereich mit dem biozid wirkenden Mittel in Kontakt steht.

11. Rohrleitungssystem nach Anspruch 10
**dadurch gekennzeichnet,**
**dass** im Überdeckungsabschnitt (7) mindestens eine der einander zugewandten Oberflächen des Leitungsabschnittes (4) und des Verbindungselementes (1) mindestens in dem mit Trinkwasser in Berührung kommenden Bereich mit einer biozid wirkenden Polymer aufweisenden Beschichtung (16) versehen ist.
